# FASCICULE DE BREVET EUROPEEN

(11) **EP 4 163 136 B1**
(45) Date de publication et mention de la délivrance du brevet: **22.07.2026**
(21) Numéro de dépôt: 22200217.2
(22) Date de dépôt: 07.10.2022
(51) Int. Cl.: B60J 5/10, E05C 17/56, E05C 19/16

(54) **ENSEMBLE DE CARROSSERIE COMPRENANT UN DISPOSITIF DE RETENUE DE PORTE**
KAROSSERIEANORDNUNG MIT EINER TÜRHALTEVORRICHTUNG
BODY ASSEMBLY INCLUDING A DOOR RETAINER

(30) Priorité: 08.10.2021 FR 2110680
(43) Date de publication de la demande: 12.04.2023
(73) Titulaire: Lecapitaine Industrie, 50000 Saint Lô (FR)
(72) Inventeur: YBERT, Florentin, 50800 VILLEDIEU LES POELES (FR); BRZOKEWICZ, Olivier, 50000 SAINT LO (FR)
(74) Mandataire: Lavoix

(56) Documents cités:
- EP-A1- 2 527 573
- CN-U- 206 844 892
- DE-A1- 102013 100 107
- JP-A- H08 277 669

## Description

La présente invention concerne un ensemble de carrosserie du type comprenant au moins une paroi latérale, définissant une surface interne, destinée à délimiter un espace de stockage, et une surface externe, opposée à la surface interne, et au moins une porte mobile par rapport à la paroi latérale entre une position fermée, dans laquelle la porte est destinée à fermer au moins une partie de l'espace de stockage, et une position ouverte, dans laquelle une surface externe de la porte s'étend en regard de la surface externe de la paroi latérale, l'ensemble de carrosserie comprenant en outre un dispositif de retenue de la porte dans la position ouverte, ledit dispositif de retenue comprenant :
- au moins un premier élément magnétique fixé à la paroi latérale,
- au moins un deuxième élément magnétique fixé à la porte, le deuxième élément magnétique coopérant avec le premier élément magnétique lorsque la porte est dans la position ouverte de sorte à maintenir la porte dans la position ouverte, et
- un dispositif d'actionnement agencé pour défaire la coopération entre le premier élément magnétique et le deuxième élément magnétique lorsque ledit dispositif d'actionnement est actionné,

L'invention concerne également un véhicule utilitaire comprenant un tel ensemble de carrosserie.

L'invention s'applique par exemple à un ensemble de carrosserie pour véhicule utilitaire pour le transport de marchandises, tel qu'un camion ou une camionnette, par exemple un camion frigorifique pour le transport de marchandises périssables. L'invention s'applique également aux remorques ou semi-remorques et aux caisses définissant un espace de stockage non mobile comprenant au moins une paroi latérale et une porte.

Le chargement et le déchargement de marchandises dans et d'un espace de stockage se fait généralement en ouvrant une porte d'accès à l'espace de stockage et en plaçant celle-ci le long d'une paroi latérale délimitant l'espace de stockage, afin de libérer le plus grand accès possible à l'espace de rangement et afin de réduire l'encombrement de la porte dans la position ouverte.

Pour limiter les risques de déplacement inopportun de la porte vers sa position fermée, par exemple sous l'effet du vent ou, dans le cas d'un véhicule, lorsque le véhicule se déplace alors que la porte est restée ouverte, il est connu de prévoir un dispositif de retenue de la porte dans la position ouverte, ce dispositif immobilisant la porte contre la paroi latérale contre laquelle la porte est rabattue. En effet, si la porte se déplace involontairement vers la position fermée, elle risque notamment de blesser la ou les personnes accédant à l'espace de stockage du véhicule.

Plusieurs types de dispositifs de retenue sont connus. Il peut ainsi être prévu une coopération mécanique entre la carrosserie ou la caisse du véhicule et la porte dans la position de la porte. Par exemple, un système de loquet peut être installé entre la paroi latérale et la porte. Cependant, un tel système est peu robuste et peu pratique d'utilisation car il doit être manœuvré en passant la main entre la paroi latérale et la porte. Un système de levier déployable agencé pour prendre appui contre la surface interne de la porte dans la position ouverte de celle-ci est également connu. Cependant, un tel système est encombrant et peut notamment interférer avec d'autres éléments agencés sous la caisse du véhicule. En outre, le déploiement et le rangement du levier nécessite plusieurs mouvements rendant ce système peu ergonomique. D'autres systèmes mécaniques sont connus mais ils présentent des inconvénients similaires à ceux mentionnés ci-dessus et/ou nécessitent un effort trop important pour libérer la porte lorsque l'on souhaite la refermer.

En variante, une coopération magnétique peut être prévue entre la paroi latérale et la porte peut être prévue pour retenir la porte en position ouverte. La force magnétique de la coopération doit être suffisamment importante pour assurer un maintien robuste de la porte en position ouverte. Cependant, un utilisateur doit alors exercer un effort important pour défaire cette coopération lorsqu'il souhaite refermer la porte. Toute réduction de la force d'adhérence entre les éléments magnétiques pour faciliter la manœuvre de la porte se fait alors au détriment de la robustesse du maintien de la porte en position ouverte. En outre, cet effort est effectué en tirant sur la porte alors que l'utilisateur n'a pas de prise ergonomique sur la porte, ce qui l'oblige à tenir la porte par une zone « polluée » de celle-ci, c'est-à-dire une zone exposée aux éléments extérieurs.

Pour pallier l'inconvénient du dimensionnement de la force magnétique, le document DE 10 2013 100 107 a proposé un dispositif d'actionnement permettant de défaire la coopération magnétique en écartant une partie d'un élément magnétique prévu sur la porte d'un élément magnétique complémentaire prévu sur la paroi latérale. Ce décollement d'une partie de l'élément magnétique permet de réduire la force nécessaire pour défaire la coopération magnétique. Le dispositif d'actionnement comprend une poignée reliée à l'élément magnétique et prévue entre la surface externe de la porte et la surface externe de la paroi latérale. L'utilisateur actionne cette poignée en saisissant un bord de la porte et en pressant la poignée de sorte à déplacer une partie de l'élément magnétique.

Ainsi, l'utilisateur doit tenir la porte par une zone polluée de celle-ci, à savoir le bord de la porte sur lequel est prévue la poignée. En outre, l'emplacement et l'actionnement de la poignée nécessite de prévoir un espace entre la surface externe de la porte et la surface externe de la paroi latérale afin de loger de la poignée et de permettre à un utilisateur d'actionner celle-ci. Cela augmente l'encombrement et la prise au vent de la porte en position ouverte.

Le document CN 206 844 892 décrit un dispositif de retenue d'une porte sur une paroi actionnable au moyen d'une poignée.

L'un des buts de l'invention est de pallier ces inconvénients en proposant un ensemble de carrosserie de véhicule comprenant un dispositif de retenue de la porte et un dispositif d'actionnement du dispositif de retenue qui soit simple et ergonomique à utiliser tout en réduisant l'encombrement de la porte en position ouverte.

A cet effet, l'invention concerne un ensemble de carrosserie du type précité, dans lequel le dispositif d'actionnement s'étend au moins en partie en saillie d'une surface interne de la porte, opposée à la surface externe de la porte, le dispositif d'actionnement étant agencé pour écarter au moins une partie du deuxième élément magnétique du premier élément magnétique lorsque le dispositif d'actionnement est actionné selon une direction d'actionnement tendant à écarter ledit dispositif d'actionnement de la surface interne de la porte et de la surface externe de la paroi latérale.

En prévoyant que le dispositif d'actionnement s'étende du côté de la surface interne de la porte, l'espace entre la porte et la paroi latérale peut être réduit, ce qui limite l'encombrement et la prise au vent de la porte en position ouverte. En outre, l'actionnement du dispositif d'actionnement du côté de la surface intérieure de la porte ne nécessite pas de saisir une zone polluée de celle-ci, ce qui rend l'utilisation du dispositif de retenue et de son dispositif d'actionnement plus ergonomique.

L'ensemble de carrosserie selon l'invention peut en outre comprendre une ou plusieurs des caractéristiques suivantes, prises isolément ou selon toute combinaison techniquement envisageable :
- le dispositif d'actionnement comprend un élément d'actionnement et un élément de préhension, l'élément de préhension s'étendant en saillie de la surface interne de la porte et l'élément d'actionnement reliant l'élément de préhension au deuxième élément magnétique, au moins une partie dudit deuxième élément magnétique étant déplacée par l'élément d'actionnement lorsque l'élément de préhension est actionné selon la direction d'actionnement ;
- l'élément d'actionnement est agencé pour transformer un déplacement en translation de l'élément de préhension selon la direction d'actionnement en un déplacement en rotation du deuxième élément magnétique, ledit mouvement de rotation écartant une partie du deuxième élément magnétique du premier élément magnétique de sorte à réduire la force d'adhésion entre le premier élément magnétique et le deuxième élément magnétique ;

- le deuxième élément magnétique est solidaire d'une partie de réception d'une plaque, ladite plaque comprenant une partie d'actionnement, en prise avec une extrémité de l'élément d'actionnement opposée à l'élément de préhension, et une partie d'appui en appui contre une surface de la porte, ladite partie de réception s'étendant entre la partie d'actionnement et la partie d'appui, la plaque formant un bras de levier entre l'extrémité de l'élément d'actionnement et la partie d'appui, l'élément d'actionnement déplaçant la plaque en rotation autour d'un axe de rotation passant par la partie d'appui de sorte à écarter la partie d'actionnement et la partie de réception de la surface externe de la porte lorsque l'élément de préhension est actionné selon la direction d'actionnement ;
- le deuxième élément magnétique s'étend au voisinage de la surface externe de la porte, l'élément d'actionnement s'étendant entre la surface interne et la surface externe de la porte ;
- l'élément d'actionnement est monté mobile en translation selon la direction d'actionnement dans un fourreau s'étendant dans la porte à partir de la surface interne de la porte ;
- le dispositif de retenue comprend une membrane de protection s'étendant sur une ouverture formée dans la surface externe de la porte, le deuxième élément magnétique s'étendant dans ladite ouverture, ladite membrane de protection s'étendant entre le premier élément magnétique et le deuxième élément magnétique dans la position ouverte de la porte ;
- le premier élément magnétique est formé par une tôle métallique s'étendant sur la surface externe de la paroi latérale et le deuxième élément magnétique est formé par un aimant permanent ;
- la distance entre la surface externe de la paroi latérale et la surface externe de la porte est inférieure ou égale à 20 mm dans la position ouverte de la porte.

Selon un autre aspect, l'invention concerne également un véhicule utilitaire comprenant un ensemble de carrosserie tel que décrit ci-dessus.

D'autres aspects et avantages de l'invention apparaîtront à la lecture de la description qui suit, donnée à titre d'exemple et faite en référence aux dessins annexés, dans lesquels :
[Fig 1] - la Fig. 1 est une représentation schématique en coupe d'un ensemble de carrosserie selon l'invention selon un plan de coupe longitudinal et transversal,
[Fig 2] - la Fig. 2 est une représentation schématique en perspective d'un dispositif d'actionnement d'un dispositif de retenue destiné à équiper une porte d'un ensemble de carrosserie selon l'invention,
[Fig 3] - la Fig. 3 est une représentation schématique en perspective éclatée du dispositif d'actionnement de la Fig. 2,
[Fig 4] - la Fig. 4 est une représentation schématique en coupe du dispositif d'actionnement de la Fig. 2 selon l'axe IV-IV de la Fig. 2, le dispositif d'actionnement étant dans une position de repos, et
[Fig 5] - la Fig. 5 est une représentation schématique en coupe du dispositif d'actionnement de la Fig. 4, le dispositif d'actionnement étant dans une position actionnée.

Dans la description, les termes « longitudinal », « transversal » et « élévation » sont définis selon les directions usuelles d'un véhicule, le terme « longitudinal » se référant à la direction avant-arrière du véhicule, le terme « transversal » se référant à la largeur du véhicule et le terme « élévation » se référant à la hauteur du véhicule.

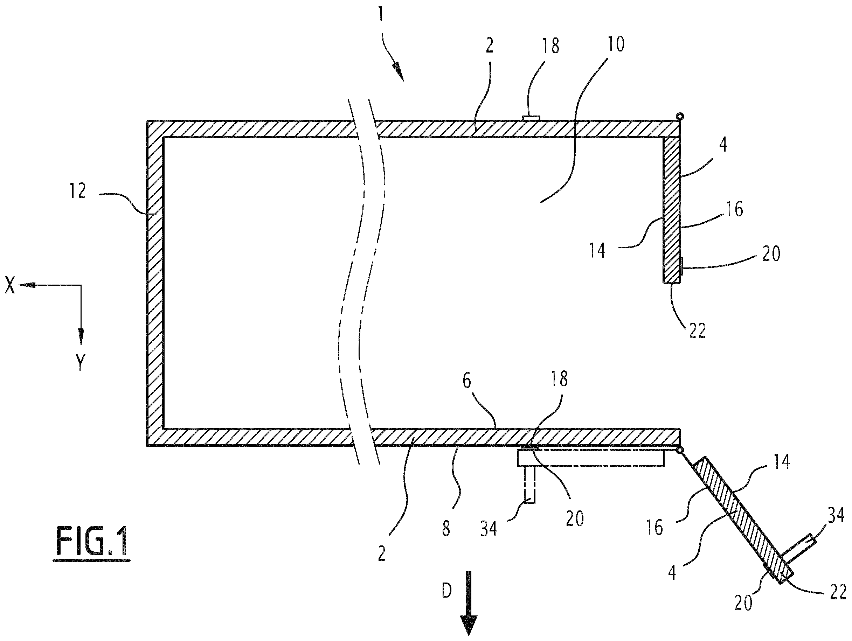

En référence à la Fig. 1, on décrit un ensemble de carrosserie 1 comprenant au moins une paroi latérale 2 et une porte 4. Comme indiqué précédemment, l'invention s'applique par exemple à un véhicule utilitaire comprenant un tel ensemble de carrosserie.

La paroi latérale 2 s'étend principalement selon la direction longitudinale, correspondant à la longueur de la paroi latérale 2 et selon la direction d'élévation, correspondant à la hauteur de la paroi latérale 2 et présente une épaisseur selon la direction transversale. La paroi latérale 2 comprend une surface interne 6 et une surface externe 8 s'étendant chacune selon la direction longitudinale et la direction d'élévation. L'épaisseur de la paroi latérale 2 est définie comme étant la distance séparant la surface interne 6 de la surface externe 8. Dans le cas d'un véhicule utilitaire ou autre, la surface interne 6 de la paroi latérale délimite une partie d'un espace de stockage 10 et la surface externe 8 s'étend du côté extérieur de l'espace de stockage à l'opposé de la surface interne 6.

Selon le mode de réalisation représenté sur la Fig. 1, l'espace de stockage est fermé par deux parois latérales 2 selon la direction transversale, par un plancher et un plafond (non représentés) selon la direction d'élévation et par une paroi transversale 12 joignant les parois latérales 2 et une ou deux portes 4 selon la direction longitudinale.

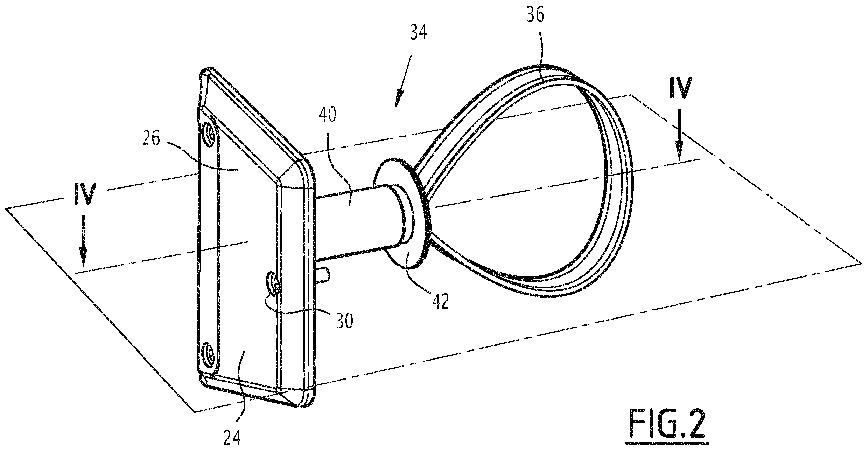

Plus particulièrement, chaque porte 4 est montée mobile en rotation sur et par rapport à une paroi latérale 2 entre une position fermée dans laquelle la porte ferme l'espace de stockage 10 et une position ouverte, dans laquelle la porte libère un accès à l'espace de stockage 10. De façon connue, l'axe de rotation s'étend selon la direction d'élévation entre une extrémité longitudinale de la paroi latérale 2 et un bord correspondant de la porte 4. Sur la Fig. 1, la porte de droite a été représentée en position fermée et la porte de gauche a été représentée, en traits pleins, dans une position intermédiaire entre la position fermée et la position ouverte et, en traits pointillés, dans la position ouverte. Dans la position fermée, la porte 4 s'étend sensiblement perpendiculairement à la paroi latérale 2 et, dans la position ouverte, la porte 4 s'étend sensiblement parallèlement et contre la surface externe 8 de la paroi latérale 2, comme représenté en traits pointillés sur la Fig. 2.

La ou chaque porte 4 comprend une surface interne 14, délimitant l'espace de stockage 10 dans la position fermée, et une surface externe 16, opposée à la surface interne 16, et tournée vers l'extérieur du véhicule dans la position fermée.

Il est entendu que l'invention décrite ci-dessous s'applique à chacune des deux portes 4 ou à un espace de stockage fermé par une seule porte 4 ou encore à un espace de stockage fermé par plus une porte comprenant plusieurs battants, comme cela sera mentionné ultérieurement. L'invention étant identique pour chaque porte 4 et la paroi latérale 2 associée, la description ne sera faite que pour une porte 4 et la paroi latérale 2 sur laquelle cette porte 4 est montée.

Un dispositif de retenue est prévu entre la porte 4 et la paroi latérale 2 associée pour maintenir la porte 4 en position ouverte contre la paroi latérale 2.

Le dispositif de retenue comprend au moins un premier élément magnétique 18 solidaire de la paroi latérale 2 et au moins un deuxième élément magnétique 20 solidaire de la porte 4, le premier élément magnétique 18 et le deuxième élément magnétique 20 étant agencés pour coopérer magnétiquement dans la position ouverte de la porte 4 afin d'immobiliser celle-ci contre la paroi latérale 2.

Le premier élément magnétique 18 est par exemple fixé sur la surface externe 8 de la paroi latérale 2, dans une zone s'étendant sensiblement à hauteur d'homme, par exemple au voisinage d'un bord inférieur de la paroi latérale 2 selon la direction d'élévation, et en regard d'une partie adjacente à un bord libre 22 de la porte 4 lorsque la porte 4 est rabattue contre la paroi latérale 2 dans la position ouverte. Le premier élément magnétique 18 est par exemple formé par une tôle métallique, réalisée en métal ferromagnétique. En variante, le panneau formant la surface externe 8 peut être réalisé en métal ferromagnétique de sorte que la paroi latérale 2 forme le premier élément magnétique 18. Selon une autre variante, le premier élément ferromagnétique s'étend à l'intérieur de la paroi latérale 2 et est par exemple collée contre le panneau qui forme la surface externe 8.

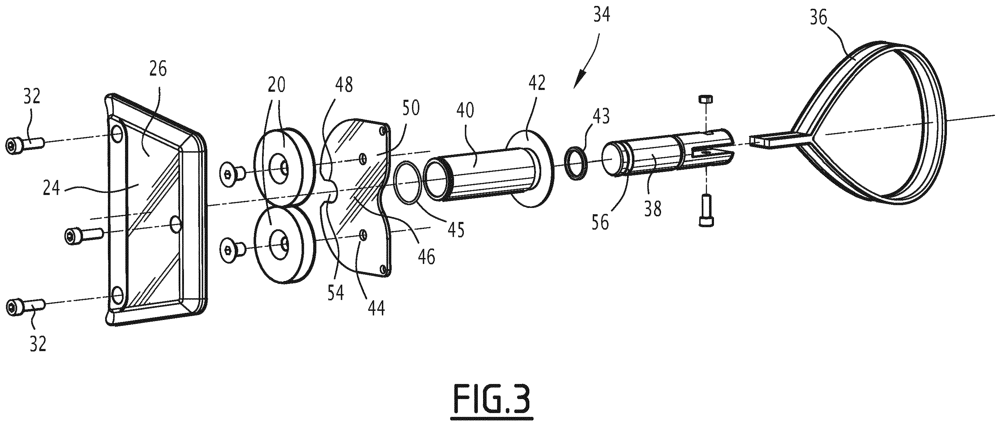

Le deuxième élément magnétique 20 est monté sur la porte 4 de sorte à s'étendre au voisinage de la surface externe 16 de la porte. Plus particulièrement, le deuxième élément magnétique 20 est monté dans une ouverture prévue dans la porte, dans une zone de celle-ci qui s'étend en regard du premier élément magnétique 18 lorsque la porte est dans la position ouverte. Le deuxième élément magnétique 20 est par exemple formé par un aimant permanent agencé pour coopérer avec le premier élément magnétique 18 avec une force d'adhérence suffisante pour retenir la porte 4 contre la paroi latérale 2 et résister à tout déplacement involontaire de la porte vers la position fermée. Le maintien de la porte 4 en position ouverte est notamment agencé pour résister à un coup de vent ou à l'effet de la circulation dans le cas d'un véhicule alors que la porte est en position ouverte, ce qui peut se produire par exemple lorsqu'un utilisateur ne ferme pas la porte entre deux opérations de chargement de l'espace de stockage à des quais de chargement différents. La force d'adhérence entre le deuxième élément magnétique 20 et le premier élément magnétique 18 est par exemple supérieure ou égale à 35 Kg. Selon le mode de réalisation représenté sur la Fig. 3, deux deuxièmes éléments magnétiques 20 sont prévus pour augmenter la surface d'adhérence entre la porte 4 et la paroi latérale 2 et ainsi améliorer le maintien de la porte 4 en position ouverte. Selon le mode de réalisation représenté sur la Fig. 3, les deux deuxièmes éléments magnétiques 20 sont disposés l'un au-dessus de l'autre selon la direction d'élévation. Il est entendu que les deux deuxièmes éléments magnétiques pourraient en variante être disposés l'un à côté de l'autre. Il est entendu que plus de deux deuxièmes éléments magnétiques pourraient également être prévus.

L'ouverture est une ouverture traversante débouchant dans la surface externe 16 et dans la surface interne 14 de la porte 4.

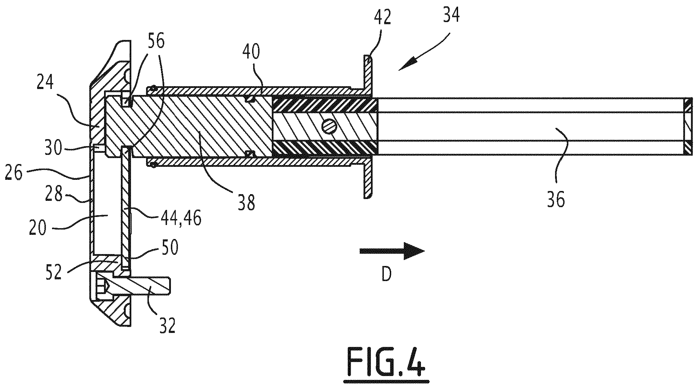

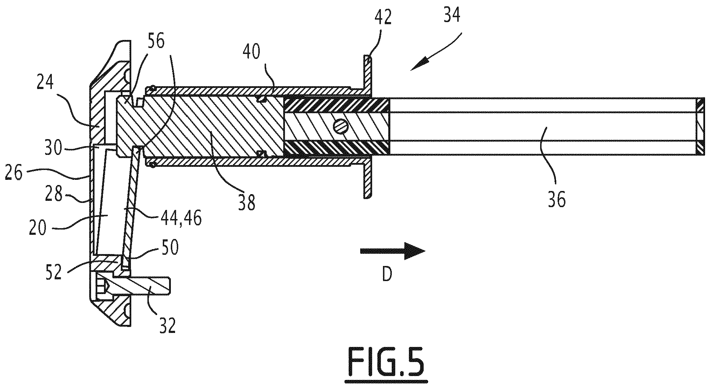

Comme représenté sur les Figs. 2 à 5, du côté de la surface externe 16, l'ouverture est par exemple fermée par une membrane de protection 24 qui est également agencée pour former un logement pour le ou les deuxièmes éléments magnétiques 20. Plus particulièrement, la membrane de protection 24 présente une surface externe 26, qui forme la surface externe 16 de la porte 4 au niveau de l'ouverture, et une surface interne 28 contre laquelle s'étend le ou les deuxièmes éléments magnétiques 20, la surface interne 28 définissant ainsi un logement 30 recevant le ou les deuxièmes éléments magnétiques 18, comme représenté sur les Figs. 4 et 5. La membrane de protection 24 s'étend également sur le bord de l'ouverture du côté de la surface externe 16 de la porte 4 afin d'assurer une étanchéité de l'ouverture du côté de la surface externe 16. En d'autres termes, l'aire de la surface externe 26 de la membrane de protection 24 est supérieure à l'aire de l'ouverture dans la surface externe 16 de la porte 4 et la membrane de protection 24 s'étend du côté de la surface externe 16 de la porte 4 sur l'ouverture. La membrane de protection 24 est par exemple fixée par des vis 30 sur le bord de l'ouverture. La membrane de protection 24 est réalisée en un matériau souple de sorte à permettre d'absorber la présence d'éléments parasites qui pourraient avoir un impact négatif sur l'entrefer entre les premier et deuxième éléments magnétiques et donc sur la force d'adhérence du dispositif de retenue. A cet effet, la membrane de protection 24 est par exemple réalisée en matériau élastomère. Lorsque la porte est en position ouverte, la membrane de protection 24 s'étend donc entre le premier élément magnétique 18 et le deuxième élément magnétique 20, la surface externe 26 de la membrane de protection 24 étant appliquée contre le premier élément magnétique 18 lorsque celui-ci est formée par une tôle fixée sur la surface externe 8 de la paroi latérale 2 ou par la paroi latérale 2 elle-même.

Le dispositif de retenue comprend en outre un dispositif d'actionnement 34 du dispositif de retenue permettant de défaire la coopération magnétique entre le premier élément magnétique 18 et le ou les deuxièmes éléments magnétiques 20 lorsque ce dispositif d'actionnement 34 est actionné par un utilisateur selon une direction d'actionnement D.

Plus particulièrement, le dispositif d'actionnement 34 s'étend en partie en saillie de la surface interne 14 de la porte 4 et la direction d'actionnement D tend à écarter le dispositif d'actionnement 34 de la surface interne 14 de la porte et de la surface externe 8 de la paroi latérale 2 lorsque la porte est en position ouverte. Ainsi, lorsque la porte est en position ouverte, la direction d'actionnement D est par exemple sensiblement perpendiculaire à la surface interne 14 de la porte et à la surface externe 8 de la paroi latérale 2 et est dirigée vers l'extérieur de l'ensemble de carrosserie, comme représenté sur la Fig. 1. Ainsi, l'actionnement du dispositif d'actionnement se fait du côté intérieur de la porte 4 sans avoir à toucher de zone polluée de celle-ci. En outre, le dispositif d'actionnement 34 ne comprend aucune partie s'étendant entre la surface externe 8 de la paroi latérale 2 et la surface externe 16 de la porte 4 et il n'est pas nécessaire de prévoir un espace minimal pour qu'un utilisateur puisse y passer la main, ce qui signifie que l'espace entre ces surfaces externes peut être réduit à son minimum en position ouverte de la porte 4, ce qui réduit la prise au vent de la porte, et donc les risques de déplacement involontaire de la porte 4 vers la positon fermée, et l'encombrement de la porte 4 en position ouverte. Ainsi, grâce au positionnement du dispositif d'actionnement 34 du côté intérieur de la porte 4, la distance entre la surface externe 14 de la paroi latérale 2 et la surface externe 16 de la porte 4 en position ouverte est par exemple inférieure ou égale à 20 mm.

Plus particulièrement, le dispositif d'actionnement 34 comprend par exemple un élément de préhension 36 par lequel un utilisateur peut actionner le dispositif d'actionnement 34 et un élément d'actionnement 38 reliant l'élément de préhension au(x) deuxième(s) élément(s) magnétique(s) 20 et agencé pour transformer un déplacement de l'élément de préhension 34 selon la direction d'actionnement D en un écartement entre une partie du ou des deuxièmes éléments magnétiques 20 et le premier élément magnétique 18 de sorte à permettre de défaire la coopération magnétique du dispositif de retenue.

L'élément de préhension 36 est par exemple formé par une poignée qu'un utilisateur peut saisir du côté intérieur de la porte 4 en position ouverte pour tirer la porte 4 vers lui. L'élément de préhension 36 est la partie du dispositif d'actionnement 34 qui s'étend en saillie de la surface interne 14 de la porte 4 du côté intérieur de la porte 4, c'est-à-dire à l'opposé de l'espace entre la surface externe 16 de la porte 4 et la surface externe 8 de la paroi latérale 2.

L'élément d'actionnement 38 s'étend de l'élément de préhension 36 à ou aux deuxièmes éléments magnétiques 20 en passant à l'intérieur de la porte 4, c'est-à-dire entre la surface interne 14 et la surface externe 16 de celle-ci. Plus particulièrement, l'élément d'actionnement 38 s'étend dans l'ouverture traversante de la porte 4, décrite précédemment. L'élément d'actionnement 38 est solidaire de l'élément de préhension 36 de sorte qu'un déplacement de l'élément de préhension 36 selon la direction d'actionnement D entraîne un déplacement correspondant en translation de l'élément d'actionnement 38 selon la direction d'actionnement D.

Plus particulièrement, selon le mode de réalisation représenté sur les Figs. 2 à 5, l'élément d'actionnement 38 est formé par un coulisseau monté mobile en translation selon la direction d'actionnement D à l'intérieur d'un fourreau 40 s'étendant à l'intérieur de la porte 4 dans l'ouverture traversante. Le fourreau 40 comprend par exemple une bague 42 s'étendant radialement à son extrémité du côté de la surface interne 14 de la porte 4, cette bague 42 étant placée en appui contre le bord de l'ouverture du côté de la surface interne 14 de la porte 4 de sorte à assurer l'étanchéité de l'ouverture du côté de la surface interne 14 de la porte 4. Ainsi, on évite l'introduction d'éléments extérieurs, tels que de la poussière ou des projections de liquide, dans l'ouverture de la porte 4, l'étanchéité étant assurée à l'extérieur de la porte par la membrane de protection 24 du côté de la surface externe 16 de la porte et par la bague 42 du fourreau 40 du côté de la surface interne 14 de la porte. Comme représenté sur la Fig. 3, un joint 43 peut être prévu pour assurer l'étanchéité entre l'élément d'actionnement 38 et le fourreau 40 et/ou un joint 45 peut être prévu pour assurer l'étanchéité entre le fourreau 40 et l'intérieur de la porte, à l'intérieur de la porte.

Lorsque le dispositif d'actionnement 34 est déplacé selon la direction d'actionnement D entre une position de repos (Fig. 4) et une position d'actionnement (Fig. 5), l'élément d'actionnement 38 est agencé pour déplacer le ou les deuxièmes éléments magnétiques 20 de sorte à écarter une partie de ceux-ci du premier élément magnétique 18 et ainsi réduire la force d'adhésion entre le ou les deuxièmes éléments magnétiques 20 et le premier élément magnétique 18, comme cela sera décrit plus en détail ultérieurement.

Le mouvement du ou des deuxièmes éléments magnétiques 20 est par exemple un mouvement de rotation autour d'un axe de rotation voisin d'un bord du ou des deuxièmes éléments magnétiques 20 afin d'écarter le bord opposé du ou des deuxièmes éléments magnétiques 20 du premier élément magnétique 18. A cet effet, le ou les deuxièmes éléments magnétiques 20 sont montés sur une partie de réception 44 une plaque 46 qui comprend également une partie d'actionnement 48 en prise avec l'élément d'actionnement 38 et une partie d'appui 50 en appui sur un bord 52 du logement 30. La partie de réception 44, la partie d'actionnement 48 et la partie d'appui 50 sont adjacentes les unes aux autres, la partie de réception 44 s'étendant entre la partie d'actionnement 48 et la partie d'appui 50. La partie d'actionnement 48 est voisine du bord du ou des deuxièmes éléments magnétiques 20 qui sont écartés du premier élément magnétique 18 dans la position d'actionnement et la partie d'appui 50 forme l'axe de rotation du ou des deuxièmes éléments magnétiques 50. La prise entre l'élément d'actionnement 38 et la partie d'actionnement 48 de la plaque 46 se fait par exemple en introduisant le bord d'une encoche 54 de la partie d'actionnement 48 dans une rainure 56 prévue à une extrémité de l'élément de d'actionnement 38, s'étendant en dehors du fourreau 40 à l'intérieur de la porte 4 et opposée à l'extrémité de l'élément d'actionnement 38 solidaire de l'élément de préhension 36.

Il est entendu que le dispositif d'actionnement 34 pourrait présenter une autre structure. Ainsi, l'élément d'actionnement 38 pourrait être réalisé d'une seule pièce avec l'élément de préhension ou avec la plaque 46. En variante, l'élément d'actionnement 38 pourrait être en prise direct avec le deuxième élément magnétique 20 en réalisant la plaque d'une seule pièce avec le deuxième élément magnétique 20. La membrane de protection 24 pourrait également être omise et la partie d'appui 50 être en appui directement contre une surface de la porte formée par un bord de l'ouverture de la porte du côté intérieur du panneau formant la surface externe 16 de la porte 4.

Le fonctionnement du dispositif d'actionnement 34 va à présent être décrit. Le fonctionnement étant similaire quel que soit le nombre de deuxièmes éléments magnétiques 20, le fonctionnement sera décrit en référence à un seul deuxième élément magnétique 20. En outre, le fonctionnement va être décrit en référence au mode de réalisation représenté sur les Figs. 2 à 5 et décrit en détail précédemment.

Dans la position ouverte de la porte 4, le deuxième élément magnétique 20 coopère avec le premier élément magnétique 18 pour maintenir la porte 4 en position ouverte contre la paroi latérale 2. Le dispositif d'actionnement 34 est alors dans la position de repos représentée sur la Fig. 4, dans laquelle une face du deuxième élément magnétique s'étend entièrement contre la surface interne 28 de la membrane de protection 24.

Lorsque l'utilisateur souhaite déplacer la porte 4 vers la position fermée, celui-ci saisit l'élément de préhension 36 et le tire selon la direction d'actionnement D. Comme indiqué précédemment, l'utilisateur n'a pas besoin de toucher directement la porte et n'est donc pas en contact avec une zone polluée de celle-ci.

Le déplacement de l'élément de préhension 36 selon la direction d'actionnement D entraîne un déplacement correspondant de l'élément d'actionnement en translation selon la direction d'actionnement D, ce déplacement entraînant à son tour un déplacement de la partie d'actionnement 48 de la plaque 46 selon la direction d'actionnement D, ce qui déplace la plaque 46 et le deuxième élément magnétique en rotation autour d'un axe de rotation passant par la partie d'appui 50. Ce déplacement en rotation écarte la partie d'actionnement 48 et la partie de réception 44 de la surface externe 16 de la porte 4 et donc une partie du deuxième élément magnétique 20 du premier élément magnétique 18. En d'autres termes, l'élément d'actionnement 38 est agencé pour transformer un déplacement en translation de l'élément de préhension 34 selon la direction d'actionnement D en un déplacement en rotation du deuxième élément magnétique 20. Ce déplacement se fait à l'encontre de la force d'adhésion entre le deuxième élément magnétique 20 et le premier élément d'actionnement 18 grâce au bras de levier formé entre la partie d'actionnement 48 et la partie d'appui 50, qui prend appui contre un bord du logement 30 et permet la rotation du deuxième élément magnétique 20 de sorte à écarter le bord du deuxième élément magnétique 20 qui est adjacent à la partie d'actionnement 48 du premier élément magnétique 18 et à placer le dispositif d'actionnement dans la position d'actionnement représentée sur la Fig. 5. Grâce à ce bras de levier, l'utilisateur peut défaire la coopération entre le bord du deuxième élément magnétique 20 adjacent à la partie d'actionnement 48 et le premier élément magnétique 18 par rotation du deuxième élément magnétique sans nécessiter un effort trop important de la part de l'utilisateur. L'effort de la part de l'utilisateur est notamment grandement inférieur à celui qui serait nécessaire pour écarter l'ensemble du deuxième élément magnétique 20 du premier élément magnétique 18. Ainsi, un effort d'environ 10 Kg de la part de l'utilisateur selon la direction d'actionnement D permet de déplacer une partie du deuxième élément magnétique 20 de sorte que la face du deuxième élément magnétique 20, qui était en appui contre la surface interne 28 de la membrane de protection 24 dans la position de repos, forme un angle d'environ 5° avec la surface interne 28 de la membrane de protection 24 dans la position d'actionnement, comme représenté sur la Fig. 5. Dans cette position, la force d'adhérence entre le deuxième élément magnétique 20 et le premier élément magnétique 18 est largement réduite par rapport à la force d'adhérence dans la position de repos. Ainsi, la force d'adhérence passe d'environ 35 à 50 Kg à environ 11 Kg et seul un léger effort supplémentaire de la part de l'utilisateur selon la direction d'actionnement permet de défaire totalement la coopération entre le deuxième élément magnétique 20 et le premier élément magnétique 18 et permettre le déplacement de la porte 4 vers la position fermée. Ainsi, au moyen d'un effort réduit, l'utilisateur peut défaire la coopération magnétique du dispositif de retenue alors que celle-ci est particulièrement robuste du fait de la forte force d'adhérence entre le premier élément magnétique 18 et le deuxième élément magnétique 20 lorsque le dispositif d'actionnement 34 n'est pas actionné.

On notera que le passage de la position de repos à la position d'actionnement puis à une position dans laquelle la coopération magnétique du dispositif de retenue est complètement défaite puis à un déplacement de la porte 4 vers la position fermée peut se faire d'un seul mouvement de l'utilisateur selon la direction d'actionnement D. Ainsi, la manœuvre du dispositif d'actionnement 34 est particulièrement simple.

Lorsque la porte 4 est à nouveau placée dans la position ouverte, l'attraction magnétique entre le premier élément magnétique 18 et le deuxième élément magnétique 20 permet de faire revenir le dispositif d'actionnement dans la position de repos. En variante, un élément de contrainte peut être prévu pour ramener le dispositif d'actionnement dans la position de repos dès que l'utilisateur n'exerce plus d'effort sur l'élément de préhension.

Il est entendu que l'invention pourrait également s'appliquer à une porte latérale, montée sur la paroi latérale de sorte à fermer une ouverture d'accès à l'espace de stockage pratiquée dans cette paroi latérale.

En outre, dans le cas d'une porte formée de plusieurs battants ou ventaux mobiles les uns par rapport aux autres, par exemple un battant central et deux battants latéraux, permettant une ouverture modulable de la porte pour libérer un accès plus ou moins grand à l'espace de stockage, l'un des battants latéraux pourrait en outre être pourvu d'un premier élément magnétique et le battant central d'un ou plusieurs deuxièmes éléments magnétiques, de sorte que le battant central peut être retenu en position ouverte contre le battant latéral lorsque seul le battant central est ouvert. Le dispositif d'actionnement fonctionne alors entre le battant central et le battant latéral de manière similaire à ce qui a été décrit précédemment entre la porte et la paroi latérale. Lorsqu'une ouverture plus grande est souhaitée, le battant latéral et le battant central peuvent être solidarisés pour former une porte rabattable en position ouverte contre la paroi latérale, le ou les deuxièmes éléments magnétiques du battant central coopérant alors avec le premier élément magnétique prévu sur la paroi latérale.

## Revendications

1. Ensemble de carrosserie (1) comprenant au moins une paroi latérale (2), définissant une surface interne (6), destinée à délimiter un espace de stockage (10), et une surface externe (8), opposée à la surface interne (6), et au moins une porte (4) mobile par rapport à la paroi latérale (2) entre une position fermée, dans laquelle la porte (4) est destinée à fermer au moins une partie de l'espace de stockage (10), et une position ouverte, dans laquelle une surface externe (16) de la porte (4) s'étend en regard de la surface externe (8) de la paroi latérale (2), l'ensemble de carrosserie comprenant en outre un dispositif de retenue de la porte dans la position ouverte, ledit dispositif de retenue comprenant :
- au moins un premier élément magnétique (18) fixé à la paroi latérale (2),
- au moins un deuxième élément magnétique (20) fixé à la porte (2), le deuxième élément magnétique (20) coopérant avec le premier élément magnétique (18) lorsque la porte (4) est dans la position ouverte de sorte à maintenir la porte (4) dans la position ouverte, et
- un dispositif d'actionnement (34) agencé pour défaire la coopération entre le premier élément magnétique (18) et le deuxième élément magnétique (20) lorsque ledit dispositif d'actionnement (34) est actionné,
**caractérisé en ce que** le dispositif d'actionnement (34) s'étend au moins en partie en saillie d'une surface interne (14) de la porte (4), opposée à la surface externe (16) de la porte (4), le dispositif d'actionnement (34) étant agencé pour écarter au moins une partie du deuxième élément magnétique (20) du premier élément magnétique (18) lorsque le dispositif d'actionnement (34) est actionné selon une direction d'actionnement (D) tendant à écarter ledit dispositif d'actionnement (34) de la surface interne (14) de la porte (4) et de la surface externe (8) de la paroi latérale (2).

2. Ensemble de carrosserie selon la revendication 1, dans lequel le dispositif d'actionnement (34) comprend un élément d'actionnement (38) et un élément de préhension (36), l'élément de préhension (36) s'étendant en saillie de la surface interne (14) de la porte (4) et l'élément d'actionnement (38) reliant l'élément de préhension (36) au deuxième élément magnétique (20), au moins une partie dudit deuxième élément magnétique (20) étant déplacée par l'élément d'actionnement (38) lorsque l'élément de préhension (36) est actionné selon la direction d'actionnement (D).

3. Ensemble de carrosserie selon la revendication 2, dans lequel l'élément d'actionnement (38) est agencé pour transformer un déplacement en translation de l'élément de préhension (34) selon la direction d'actionnement (D) en un déplacement en rotation du deuxième élément magnétique (20), ledit mouvement de rotation écartant une partie du deuxième élément magnétique (20) du premier élément magnétique (18) de sorte à réduire la force d'adhésion entre le premier élément magnétique (18) et le deuxième élément magnétique (20).

4. Ensemble de carrosserie selon la revendication 3, dans lequel le deuxième élément magnétique (20) est solidaire d'une partie de réception (44) d'une plaque (46), ladite plaque (46) comprenant une partie d'actionnement (48), en prise avec une extrémité de l'élément d'actionnement (38) opposée à l'élément de préhension (36), et une partie d'appui (50) en appui contre une surface de la porte (4), ladite partie de réception (44) s'étendant entre la partie d'actionnement (48) et la partie d'appui (50), la plaque (46) formant un bras de levier entre l'extrémité de l'élément d'actionnement (38) et la partie d'appui (50), l'élément d'actionnement (38) déplaçant la plaque (46) en rotation autour d'un axe de rotation passant par la partie d'appui (50) de sorte à écarter la partie d'actionnement (48) et la partie de réception (44) de la surface externe (16) de la porte (4) lorsque l'élément de préhension (36) est actionné selon la direction d'actionnement (D).

5. Ensemble de carrosserie selon l'une quelconque des revendications 2 à 4, dans lequel le deuxième élément magnétique (20) s'étend au voisinage de la surface externe (16) de la porte (4), l'élément d'actionnement (38) s'étendant entre la surface interne (14) et la surface externe (16) de la porte (2).

6. Ensemble de carrosserie selon la revendication 5, dans lequel l'élément d'actionnement (38) est monté mobile en translation selon la direction d'actionnement (D) dans un fourreau (40) s'étendant dans la porte (4) à partir de la surface interne (14) de la porte (4).

7. Ensemble de carrosserie selon l'une quelconque des revendications 1 à 6, dans lequel le dispositif de retenue comprend une membrane de protection (24) s'étendant sur une ouverture formée dans la surface externe (16) de la porte (4), le deuxième élément magnétique (20) s'étendant dans ladite ouverture, ladite membrane de protection (24) s'étendant entre le premier élément magnétique (18) et le deuxième élément magnétique (20) dans la position ouverte de la porte (4).

8. Ensemble de carrosserie selon l'une quelconque des revendications 1 à 7, dans lequel le premier élément magnétique (18) est formé par une tôle métallique s'étendant sur la surface externe (8) de la paroi latérale (2) et le deuxième élément magnétique (20) est formé par un aimant permanent.

9. Ensemble de carrosserie selon l'une quelconque des revendications 1 à 8, dans lequel la distance entre la surface externe (8) de la paroi latérale (2) et la surface externe (16) de la porte (4) est inférieure ou égale à 20 mm dans la position ouverte de la porte (4).

10. Véhicule utilitaire comprenant un ensemble de carrosserie (1) selon l'une quelconque des revendications 1 à 9.

## Patentansprüche

1. Karosserieanordnung (1), umfassend wenigstens eine Seitenwand (2), die eine Innenfläche (6) definiert, die dazu bestimmt ist, einen Lagerraum (10) zu begrenzen, und eine Außenfläche (8), die der Innenfläche (6) gegenüberliegt, und wenigstens eine Tür (4), die relativ zu der Seitenwand (2) zwischen einer geschlossenen Stellung, in der die Tür (4) dazu bestimmt ist, wenigstens einen Abschnitt des Lagerraums (10) zu verschließen, und einer offenen Stellung, in der sich eine Außenfläche (16) der Tür (4) der Außenfläche (8) der Seitenwand (2) zugewandt erstreckt, beweglich ist, wobei die Karosserieanordnung ferner eine Vorrichtung zum Halten der Tür in der offenen Stellung umfasst, wobei die Haltevorrichtung umfasst:
- wenigstens ein erstes magnetisches Element (18), das an der Seitenwand (2) befestigt ist,
- wenigstens ein zweites magnetisches Element (20), das an der Tür (2) befestigt ist, wobei das zweite magnetische Element (20) mit dem ersten magnetischen Element (18) zusammenwirkt, wenn sich die Tür (4) in der offenen Stellung befindet, um die Tür (4) in der offenen Stellung zu halten, und
- eine Betätigungsvorrichtung (34), die dazu ausgebildet ist, das Zusammenwirken zwischen dem ersten magnetischen Element (18) und dem zweiten magnetischen Element (20) aufzuheben, wenn die Betätigungsvorrichtung (34) betätigt wird,
**dadurch gekennzeichnet, dass** sich die Betätigungsvorrichtung (34) wenigstens teilweise vorstehend von einer Innenfläche (14) der Tür (4), die der Außenfläche (16) der Tür (4) gegenüberliegt, erstreckt, wobei die Betätigungsvorrichtung (34) dazu ausgebildet ist, wenigstens einen Abschnitt des zweiten magnetischen Elements (20) von dem ersten magnetischen Element (18) zu beabstanden, wenn die Betätigungsvorrichtung (34) in einer Betätigungsrichtung (D) betätigt wird, die dazu tendiert, die Betätigungsvorrichtung (34) von der Innenfläche (14) der Tür (4) und von der Außenfläche (8) der Seitenwand (2) zu beabstanden.

2. Karosserieanordnung nach Anspruch 1, wobei die Betätigungsvorrichtung (34) ein Betätigungselement (38) und ein Griffelement (36) umfasst, wobei sich das Griffelement (36) vorstehend von der Innenfläche (14) der Tür (4) erstreckt und das Betätigungselement (38) das Griffelement (36) mit dem zweiten magnetischen Element (20) verbindet, wobei wenigstens ein Abschnitt des zweiten magnetischen Elements (20) durch das Betätigungselement (38) verlagert wird, wenn das Griffelement (36) in Betätigungsrichtung (D) betätigt wird.

3. Karosserieanordnung nach Anspruch 2, wobei das Betätigungselement (38) dazu ausgebildet ist, eine Translationsbewegung des Griffelements (34) in Betätigungsrichtung (D) in eine Rotationsbewegung des zweiten magnetischen Elements (20) umzuwandeln, wobei die Rotationsbewegung einen Abschnitt des zweiten magnetischen Elements (20) von dem ersten magnetischen Element (18) beabstandet, um die Haftkraft zwischen dem ersten magnetischen Element (18) und dem zweiten magnetischen Element (20) zu verringern.

4. Karosserieanordnung nach Anspruch 3, wobei das zweite magnetische Element (20) mit einem Aufnahmeabschnitt (44) einer Platte (46) fest verbunden ist, wobei die Platte (46) einen Betätigungsabschnitt (48) umfasst, der mit einem dem Griffelement (36) entgegengesetzten Ende des Betätigungselements (38) in Eingriff steht, und einen Abstützabschnitt (50), der an einer Fläche der Tür (4) anliegt, wobei sich der Aufnahmeabschnitt (44) zwischen dem Betätigungsabschnitt (48) und dem Abstützabschnitt (50) erstreckt, wobei die Platte (46) einen Hebelarm zwischen dem Ende des Betätigungselements (38) und dem Abstützabschnitt (50) bildet, wobei das Betätigungselement (38) die Platte (46) um eine durch den Abstützabschnitt (50) verlaufende Drehachse rotatorisch bewegt, so dass der Betätigungsabschnitt (48) und der Aufnahmeabschnitt (44) von der Außenfläche (16) der Tür (4) beabstandet werden, wenn das Griffelement (36) in Betätigungsrichtung (D) betätigt wird.

5. Karosserieanordnung nach einem der Ansprüche 2 bis 4, wobei das zweite magnetische Element (20) sich in der Nähe der Außenfläche (16) der Tür (4) erstreckt, wobei sich das Betätigungselement (38) zwischen der Innenfläche (14) und der Außenfläche (16) der Tür (2) erstreckt.

6. Karosserieanordnung nach Anspruch 5, wobei das Betätigungselement (38) in einer Hülse (40), die in der Tür (4) von der Innenfläche (14) der Tür (4) aus verläuft, in Betätigungsrichtung (D) translatorisch beweglich angebracht ist.

7. Karosserieanordnung nach einem der Ansprüche 1 bis 6, wobei die Haltevorrichtung eine Schutzmembran (24) umfasst, die sich über eine in der Außenfläche (16) der Tür (4) ausgebildete Öffnung erstreckt, wobei sich das zweite magnetische Element (20) in der Öffnung erstreckt, wobei sich die Schutzmembran (24) in der offenen Stellung der Tür (4) zwischen dem ersten magnetischen Element (18) und dem zweiten magnetischen Element (20) erstreckt.

8. Karosserieanordnung nach einem der Ansprüche 1 bis 7, wobei das erste magnetische Element (18) von einem sich auf der Außenfläche (8) der Seitenwand (2) erstreckenden Metallblech und das zweite magnetische Element (20) von einem Permanentmagneten gebildet ist.

9. Karosserieanordnung nach einem der Ansprüche 1 bis 8, wobei der Abstand zwischen der Außenfläche (8) der Seitenwand (2) und der Außenfläche (16) der Tür (4) in der offenen Stellung der Tür (4) kleiner oder gleich 20 mm ist.

10. Nutzfahrzeug, umfassend eine Karosserieanordnung (1) nach einem der Ansprüche 1 bis 9.

## Claims

1. A bodywork assembly (1) comprising at least one side wall (2), defining an internal surface (6), intended to delimit a storage space (10), and an external surface (8), opposite the internal surface (6), and at least one door (4) movable relative to the side wall (2) between a closed position, wherein the door (4) is intended to close at least a part of the storage space (10), and an open position, wherein an external surface (16) of the door (4) extends facing the external surface (8) of the side wall (2), the bodywork assembly further comprising a device for retaining the door in the open position, said retaining device comprising:
- at least one first magnetic element (18) fixed to the side wall (2),
- at least one second magnetic element (20) fixed to the door (2), the second magnetic element (20) cooperating with the first magnetic element (18) when the door (4) is in the open position so as to maintain the door (4) in the open position, and
- an actuation device (34) arranged to undo the cooperation between the first magnetic element (18) and the second magnetic element (20) when said actuation device (34) is activated,
**characterized in that** the actuation device (34) extends at least in part in projection from an internal surface (14) of the door (4), opposite the external surface (16) of the door (4), the actuation device (34) being arranged to move at least a part of the second magnetic element (20) away from the first magnetic element (18) when the actuation device (34) is activated along an actuation direction (D) tending to move said actuation device (34) away from the internal surface (14) of the door (4) and from the external surface (8) of the side wall (2).

2. The bodywork assembly according to claim 1, wherein the actuation device (34) comprises an actuation element (38) and a gripping element (36), the gripping element (36) extending in projection from the internal surface (14) of the door (4) and the actuation element (38) connecting the gripping element (36) to the second magnetic element (20), at least one part of said second magnetic element (20) being displaced by the actuation element (38) when the gripping element (36) is activated along the actuation direction (D).

3. The bodywork assembly according to claim 2, wherein the actuation element (38) is arranged to convert a displacement in translation of the gripping element (34) along the actuation direction (D) into a displacement in rotation of the second magnetic element (20), said movement in rotation distancing a part of the second magnetic element (20) away from the first magnetic element (18) so as to reduce the attraction force between the first magnetic element (18) and the second magnetic element (20).

4. The bodywork assembly according to claim 3, wherein the second magnetic element (20) is integral with a receiving part (44) of a plate (46), said plate (46) comprising an actuating part (48), in engagement with an end of the actuation element (38) opposite the gripping element (36), and a support part (50) bearing against a surface of the door (4), said receiving part (44) extending between the actuating part (48) and the support part (50), the plate (46) forming a lever arm between the end of the actuation element (38) and the support part (50), the actuation element (38) displacing the plate (46) in rotation about an axis of rotation passing by the support part (50) so as to distance the actuating part (48) and the receiving part (44) away from the external surface (16) of the door (4) when the gripping element (36) is activated along the actuation direction (D).

5. The bodywork assembly according to any one of claims 2 to 4, wherein the second magnetic element (20) extends in the vicinity of the external surface (16) of the door (4), the actuation element (38) extending between the internal surface (14) and the external surface (16) of the door (2).

6. The bodywork assembly according to claim 5, wherein the actuation element (38) is mounted movable in translation along the actuation direction (D) in a sleeve (40) extending in the door (4) from the internal surface (14) of the door (4).

7. The bodywork assembly according to any one of claims 1 to 6, wherein the retaining device comprises a protective membrane (24) extending over an opening formed in the external surface (16) of the door (4), the second magnetic element (20) extending in said opening, said protective membrane (24) extending between the first magnetic element (18) and the second magnetic element (20) in the open position of the door (4).

8. The bodywork assembly according to any one of claims 1 to 7, wherein the first magnetic element (18) is formed by a metal sheet extending over the external surface (8) of the side wall (2) and the second magnetic element (20) is formed by a permanent magnet.

9. The bodywork assembly according to any one of claims 1 to 8, wherein the distance between the external surface (8) of the side wall (2) and the external surface (16) of the door (4) is less than or equal to 20 mm in the open position of the door (4).

10. A utility vehicle comprising a bodywork assembly (1) according to any one of claims 1 to 9.
